# EUROPÄISCHE PATENTANMELDUNG

(11) **EP 2 455 187 A1**
(43) Veröffentlichungstag der Anmeldung: **23.05.2012**
(21) Anmeldenummer: 10014889.9
(22) Anmeldetag: 23.11.2010
(51) Int. Cl.: B24B 13/005

(54) **Vorrichtung und Verfahren zum Bearbeiten einer optischen Linse**

(71) Anmelder: Schneider GmbH & Co. KG, 35112 Fronhausen (DE)
(72) Erfinder: Schneider, Gunter, 35037 Marburg (DE); Buchenauer, Helwig, 35232 Dautphetal-Buchenau (DE)
(74) Vertreter: Häckel, Stefan

(57) **Zusammenfassung**

Es werden eine Vorrichtung und ein Verfahren zum Bearbeiten einer optischen Linse vorgeschlagen, wobei zunächst ein Blockstück für die Linse spanend bearbeitet und dann mit Markierungen zum Positionieren der Linse auf dem Blockstück versehen wird.

## Beschreibung

Die vorliegende Erfindung betrifft eine Vorrichtung zum Bearbeiten einer optischen Linse gemäß dem Oberbegriff des Anspruchs 1 sowie ein Verfahren zum Bearbeiten einer optischen Linse.

Eine optische Linse, beispielsweise für eine Brille, soll bestimmte optische Eigenschaften aufweisen. Die damit einhergehenden gewünschten optischen Daten der Linse werden beispielsweise von einem Augenoptiker bestimmt. Diese Daten umfassen zum Beispiel die Angabe der Dioptrien, Daten zu Sphäre und Zylinder, zum pantoskopischen Winkel etc. Weiter können diese gewünschten optischen Daten auch den Abstand und/oder die Lage zu einem zugeordneten Auge, insbesondere bei Einbau in ein bestimmtes Brillengestell, also z. B. den pantoskopischen Winkel, Gesichtsformwinkel bzw. Fassungsscheibenwinkel, Pupillenabstand, etc. enthalten.

Früher wurden Linsen mit vorbestimmten optischen Daten, beispielsweise mit in verschiedenen Stufen erhältlichen Dioptrien, eingesetzt. Zunehmend werden jedoch Linsen eingesetzt, die die jeweils gewünschten, individualisierten optischen Daten bzw. die damit einhergehenden optischen Eigenschaften aufweisen. Derartige Linsen werden dann in Abhängigkeit von den jeweils gewünschten optischen Daten bearbeitet bzw. gefertigt, wobei die Linsen insbesondere mit so genannten Freiformflächen versehen werden (beispielsweise Gleitsichtgläser etc.). Die nachfolgende Beschreibung und die vorliegende Erfindung beziehen sich vorzugsweise auf solche Linsen bzw. Linsenrohlinge, die gemäß den gewünschten, individualisierten optischen Daten bearbeitet und insbesondere mit so genannten Freiformflächen versehen werden.

Die DE 10 2007 007 188 A1 offenbart ein Bearbeitungszentrum zum Bearbeiten einer optischen Linse aus Kunststoff. Es weist eine um eine Rotationsachse rotierende Werkstückspindel mit einer Aufnahme für eine Linse auf. Das Bearbeitungszentrum weist weiter eine Bearbeitungseinrichtung mit einem Fräswerkzeug, eine Bearbeitungseinrichtung mit einem Drehwerkzeug, eine Poliereinrichtung, eine Reinigungseinrichtung und eine Markier- bzw. Graviereinrichtung für eine bearbeitete Linse auf.

Die DE 10 2008 022 660 A1 offenbart ein Verfahren zum Bearbeiten einer Linse, wobei die zu bearbeitende Linse auf einem so genannten Blockstück als Halter temporär befestigt (geblockt) wird.

Die WO 2007/017385 A2 offenbart ein Blockstück aus Kunststoff, das angepasst an die zu bearbeitende Linse zerspanend bearbeitet wird.

Der vorliegenden Erfindung liegt die Aufgabe zugrunde, eine Vorrichtung und ein Verfahren zum Bearbeiten einer optischen Linse anzugeben, wobei ein Verblocken der Linse und/oder eine Bearbeitung insbesondere vor Ort, beispielsweise direkt bei einem Optiker o. dgl., und/oder mit geringem Organisationsaufwand erfolgen kann, und/oder wobei auch spezielle Bearbeitungen ermöglicht oder erleichtert werden.

Die obige Aufgabe wird durch eine Vorrichtung gemäß Anspruch 1 oder durch ein Verfahren gemäß Anspruch 6 gelöst. Vorteilhafte Weiterbildungen sind Gegenstand der Unteransprüche.

Ein Aspekt der vorliegenden Erfindung liegt darin, dass ein Blockstück zur (temporären) Aufnahme bzw. Halterung der zu bearbeitenden Linse zur insbesondere translatorischen und/oder rotatorischen Positionierung die Linse auf dem Blockstück markiert wird bzw. mit Markierungen versehen wird, vorzugsweise nachdem das Blockstück insbesondere vor Ort und/oder in der Vorrichtung zur Bearbeitung der Linse spanend oder auf sonstige formgebende Weise bearbeitet wurde. Dies ermöglicht und erleichtert das (korrekte) Positionieren der Linse auf dem Blockstück und dann entsprechend auch das korrekte Verbinden der Linse mit dem Blockstück, Weiter erleichtert dies dann das Bearbeiten der Linse.

Die korrekte Positionierung der Linse zum Blockstück ist insbesondere für spezielle Bearbeitungen der Linse, beispielsweise wenn die Linsen mit einem Prisma, insbesondere zur Korrektur von Strabismus, versehen sind, problematisch. Weiter ist es möglich oder teilweise erforderlich, das Blockstück an eine zu blockende Seite oder Fläche der Linse durch entsprechende Bearbeitung des Blockstücks anzupassen und anschließend zu markieren, bevor die Linse mit dieser Seite oder Fläche auf dem bearbeiteten Blockstück (temporär) befestigt, also geblockt, werden kann, um die andere Seite bzw. Fläche der Linse und/oder den Linsenrand bearbeiten zu können.

Besonders bevorzugt erfolgt die spanende oder sonstige formgebende Bearbeitung des Blockstücks mit einer Bearbeitungsvorrichtung oder in einer Vorrichtung, die auch der spanenden oder sonstigen formgebenden Bearbeitung der Linse dient. Dies gestattet einen einfachen Aufbau und/oder eine Bearbeitung insbesondere vor Ort, beispielsweise bei einem Optiker.

Besonders bevorzugt wird das Blockstück mittels einer Markiereinrichtung markiert, die auch einer Markierung von Linsen dient. Dies verringert den Aufwand und/oder gestattet eine optimale Bearbeitung und Markierung vor Ort.

Das Markieren erfolgt vorzugsweise mittels Laserlicht. Dies ermöglicht eine sehr einfache Markierung mit geringem Aufwand und/oder mit sehr großer Präzision. Insbesondere ist eine derartige Markierung auch bei verschiedenen Materialien und/oder bei verschiedensten geometrischen Gegebenheiten einsetzbar oder anwendbar. Jedoch kann das Markieren grundsätzlich auch auf jede sonstige geeignete Art und Weise, beispielsweise auch durch mechanische Bearbeitung bzw. Gravieren oder dergleichen erfolgen.

Das Markieren des zu bearbeitenden Blockstücks dient insbesondere dazu, eine translatorische und/oder rotatorische Positionierung der zu bearbeitenden Linse auf dem Blockstück zu ermöglichen oder zu erleichtern. Unter "translatorisch" ist hierbei eine Positionierung insbesondere quer oder senkrecht zu einer Bearbeitungs- oder Rotationsachse des Blockstücks oder der Linse und/oder zumindest im Wesentlichen parallel zu oder auf einer der Linse zugewandten Auflage- oder Stirnfläche des Blockstücks zu verstehen. Unter "rotatorisch" ist hier insbesondere die rotatorische Lage oder Drehlage der Linse relativ zu dem Blockstück bzw. zu der der Linse zugewandten Auflage- oder Stirnfläche des Blockstücks zu verstehen.

Die auf dem Blockstück angebrachten Markierungen sind - zumindest teilweise - vorzugsweise entlang eines Kreises oder auf einem Kreis angeordnet. Dieses erleichtert die Positionierung der Linse an oder auf dem Blockstück, insbesondere wenn die Linse mit ihrem üblicherweise kreisrunden Außendurchmesser oder mit entsprechenden linsenseitigen Markierungen auf diesem Kreis positioniert werden soll.

Die Markierungen können gegebenenfalls auch entlang eines Randbereiches, entlang einer Kante und/oder entlang eines seitlichen Umfangs, der sich beispielsweise an eine der Linse zugewandte Stirnfläche des Blockstücks axial anschließt, angebracht werden. So ist ein sehr universelles, an die jeweiligen Gegebenheiten angepasstes Markieren möglich,

Die Markierung des Blockstücks kann in Abhängigkeit von einer gewünschten exzentrischen Bearbeitung der Linse, insbesondere also auch exzentrisch, erfolgen.

Weiter kann die Linse ebenfalls mit Markierungen versehen werden, die vorzugsweise zu den Markierungen auf dem Blockstück korrespondieren. Dieses Markieren der Linse kann gegebenenfalls auch erst nach Bearbeiten einer ersten Seite der Linse erfolgen.

Nach dem Markieren des Blockstücks wird die zu bearbeitende Linse aufgeblockt, also auf dem Blockstück (temporär) befestigt, Anschließend kann die Linse insbesondere spanend oder auf sonstige Weise formgebend bearbeitet oder weiter bearbeitet werden.

Vorzugsweise weist die Vorrichtung zum Bearbeiten der optischen Linse nicht nur eine Bearbeitungseinrichtung zum spanenden oder sonstigen formgebenden Bearbeiten des Blockstücks und/oder der Linse und ggf. eine Poliereinrichtung zum Polieren der Linse, sondern insbesondere auch eine Eingabeeinrichtung für gewünschte optische Daten der Linse und eine Steuereinrichtung zum Erzeugen von Linsen-Fertigungsdaten aus den gewünschten optischen Daten und/oder zum Bestimmen von geometrischen Daten der Linse aus den gewünschten optischen Daten auf.

So kann auf einfache Weise und mit geringem Aufwand, insbesondere auch durch wenig geschultes Personal und/oder vor Ort, eine Bearbeitung der Linse derart erfolgen, dass die fertige Linse die gewünschten optischen Daten und damit die gewünschten optischen Eigenschaften aufweist. Die vom Optiker ermittelten gewünschten optischen Daten der zu erzeugenden Linse können auf einfache Weise vorgelegt werden. Eine Bedienungsperson braucht nur diese Daten und gegebenenfalls Ausgangsdaten der zu bearbeitenden Linse bzw. des Linsenrohlings einzugeben, um die Linse mit den gewünschten optischen Eigenschaften herzustellen. Die weiteren Datensätze, die den gewünschten optischen Daten nachgeordnet sind, werden von der Vorrichtung vorzugsweise selbst erzeugt.

Die Vorrichtung ist besonders bevorzugt als kompaktes Bearbeitungszentrum ausgebildet. Vom Grundsatz her zeigt bereits die DE 10 2007 007 188 A1 eine Vorrichtung in Form eines Bearbeitungszentrums. Dort ist allerdings nichts zur Steuereinrichtung und zur Eingabeeinrichtung erläutert.

Insbesondere weist die vorschlagsgemäße Vorrichtung ein gemeinsames Gehäuse für mindestens eine Bearbeitungseinrichtung und die Markiereinrichtung sowie gegebenenfalls für sonstige optionale Einrichtungen zum Polieren, Reinigen und/oder Blocken auf. Dies gestattet einen besonders kompakten und/oder kostengünstigen Aufbau und/oder eine Vereinfachung des Aufwands, der Steuerung und/oder der Bedienung. Weiter können so ansonsten erforderliche externe Schnittstellen zur Übertragung von Daten bzw. Weitergabe von Informationen minimiert oder ganz vermieden werden.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung eines bevorzugten Ausführungsbeispiels anhand der Zeichnung. Es zeigt:
- Fig. 1: einen schematischen Aufbau einer vorschlagsgemäßen Vorrichtung;
- Fig. 2: eine schematische Ansicht der Vorrichtung;
- Fig. 3: eine schematische Ansicht eines bearbeiteten Blockstücks mit einer zugeordneten Linse;

- Fig. 4: eine schematische Draufsicht des Blockstücks ohne Linse; und
- Fig. 5: eine schematische Draufsicht der Linse ohne Blockstück.

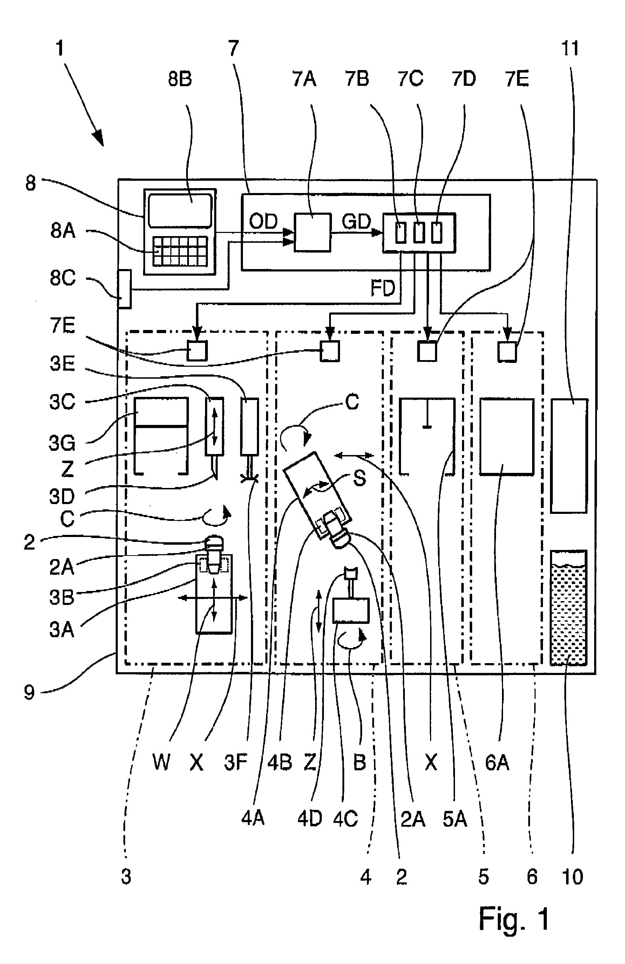

Fig. 1 zeigt schematisch eine vorschlagsgemäße Vorrichtung 1 zum Bearbeiten einer optischen Linse 2, Für den technologischen Hintergrund einer solchen Vorrichtung darf zunächst auf die Beschreibungseinleitung verwiesen werden.

Ausgangspunkt für die Entstehung bzw. Bearbeitung einer optischen Linse 2 ist ein Linsenrohling. Dieser wird spanend oder in einer sonstigen formgebenden Bearbeitung und in weiteren Bearbeitungsschritten so bearbeitet, dass am Ende eine fertige optische Linse 2 mit den gewünschten optischen Eigenschaften steht. Der Begriff "Linse" bezeichnet im Rahmen der vorliegenden Beschreibung vorzugsweise sowohl den Linsenrohling vor Durchführung der notwendigen Bearbeitungsschnitte, als auch am Ende die fertige Linse 2.

Die Linse 2 bzw. der Linsenrohling besteht vorzugsweise aus Kunststoff. Jedoch kann grundsätzlich auch ein sonstiger in geeigneter Weise zu bearbeitender Werkstoff, ggf. auch Glas bzw. Mineralglas, verwendet werden. Wenn die fertige Linse 2 für eine Brille (nicht dargestellt) eingesetzt bzw. verwendet werden soll, was vorzugsweise der Fall ist, wird die Linse 2 bei der vorliegenden Erfindung auch als Brillenglas bezeichnet, selbst wenn die Linse 2 gegebenenfalls nicht aus Glas besteht.

Die Vorrichtung 1 weist vorzugsweise mindestens oder ausschließlich eine Bearbeitungseinrichtung 3 zum spanenden oder sonstigen formgebenden Bearbeiten der Linse 2 als zu bearbeitendes Werkstück auf. Diese Bearbeitungseinrichtung 3 ist in Fig. 1 nur schematisch angedeutet.

Im dargestellten und bevorzugten Ausfiihrungsbeispiel weist die Bearbeitungseinrichtung 3 vorzugsweise eine Werkstückspindel 3A auf, die vorzugsweise in eine W-Richtung und X-Richtung verfahrbar ist, insbesondere mittels eines Kreuzschlittens, der nur angedeutet ist. Die beiden Richtungen W, X verlaufen vorzugsweise quer oder senkrecht zueinander.

Bei der Werkstückspindel 3A handelt es sich insbesondere um eine vorzugsweise direkt angetriebene, präzise gelagerte Welle bzw. einen Direktantrieb oder einen sonstigen Antrieb jeweils mit vorzugsweise integrierter oder zugeordneter Schnittstelle oder Aufnahme 3B für das Werkstück, hier also für die Linse 2 bzw. den Linsenrohling. Grundsätzlich kann eine direkte Aufnahme bzw. Einspannung der Linse 2 erfolgen. Vorzugsweise wird die Linse 2 bzw. der Linsenrohling jedoch mittelbar über einen Halter, insbesondere ein sogenanntes Blockstück 2A, gehalten. Das Blockstück 2A wird dann eingespannt.

Die Linse 2 ist temporär mit dem Blockstück 2A verbunden. Dieser mit dem Blockstück 2A verbundene Zustand wird als "geblockt" oder "aufgeblockt" bezeichnet. Das Blocken, also temporäre Befestigen, der Linse 2 am Blockstück 2A kann beispielsweise durch ein Blockmaterial, insbesondere eine vorzugsweise bei niedriger Temperatur schmelzende Legierung, wie sogenanntes Alloy-Blockmaterial, ein Harz, einen Klebstoff, einen Kunststoff, einen Klebestreifen o. dgl. erfolgen und ist aus dem Stand der Technik hinlänglich bekannt.

Die Werkstückspindel 3A weist beim Darstellungsbeispiel vorzugsweise die Aufnahme 3B, insbesondere eine Spannzange, für das Blockstück 2A auf.

Das Einspannen der Linse 2 bzw. des Blockstücks 2A an der Werkstückspindel 3A bzw. Aufnahme 3B erfolgt vorzugsweise von Hand, also manuell durch einen nicht dargestellten Bediener. Jedoch ist grundsätzlich auch ein automatisiertes Einspannen möglich.

Die Linse 2 bzw. das Blockstück 2A ist bzw. sind vorzugsweise in einer bestimmten axialen Lage und/oder Drehlage einspannbar, um die Linse 2 definiert bearbeiten zu können. Hierzu kann das Blockstück 2A auch mehrteilig aufgebaut sein, wie insbesondere aus dem Stand der Technik bekannt.

Mittels der Werkstückspindel 3A ist die eingespannte Linse 2 zur Bearbeitung in Drehung bzw. Rotation versetzbar. Die Werkstückspindel 3A bildet also insbesondere einen Drehantrieb für die Linse 2. Die Werkstückspindel 3A bildet insbesondere eine gerechnete oder gesteuerte Rundachse C, Insbesondere erfolgt eine CNC-Steuerung der Werkstückspindel 3A bzw. der Rotation der Linse 2. Besonders bevorzugt ist die Linse 2 gesteuert oder geregelt mit einer bestimmten Drehzahl und/oder mit einer definierten Drehlage in Drehung bzw. Rotation versetzbar.

Im dargestellten Ausführungsbeispiel ist die Werkstückspindel 3A mit dem eingespannten bzw. aufgeblockten Linsenrohling 2 vorzugsweise in W-Richtung zu einem Bearbeitungswerkzeug zustellbar bzw. positionierbar und/oder in X-Richtung quer zur Zustellrichtung (Quervorschub) bewegbar bzw. verfahrbar, Insbesondere werden eine gesteuerte W-Achse und X-Achse bzw. Linearachsen gebildet. Grundsätzlich sind auch andere oder zusätzliche Richtungen und/oder Bewegungsachsen möglich. Insbesondere kann die axiale Ausrichtung der Dreh- bzw. Rundachse C der Werkstückspindel 3A auch schräg zur W-Richtung oder zur X-Richtung verlaufen.

Die Bearbeitungseinrichtung 3 ist vorzugsweise zum Bearbeiten der Linse 2 durch Drehen, insbesondere Stirndrehen, und/oder Fräsen ausgebildet. Jedoch kann die Bearbeitungseinrichtung 3 alternativ oder zusätzlich auch ein sonstiges, insbesondere spannendes oder formgebendes Bearbeiten der Linse 2 ermöglichen.

Beim Darstellungsbeispiel weist die Bearbeitungsvorrichtung 1 vorzugsweise einen Antrieb 3C mit einem Drehwerkzeug 3D und/oder einen Fräsantrieb 3E mit einem Fräswerkzeug 3F auf. Hier ist als Bearbeitungswerkzeug insbesondere also das Drehwerkzeug 3D bzw. Fräswerkzeug 3F vorgesehen.

Die Linse 2 und das jeweilige Bearbeitungswerkzeug (hier Drehwerkzeug 3D bzw. Fräswerkzeug 3F) sind vorzugsweise relativ zueinander zustellbar und/oder bewegbar, um die jeweilige Bearbeitung zu ermöglichen.

Vorzugsweise handelt es sich bei dem Antrieb 3C um einen komplexen, vorzugsweise elektrisch arbeitenden Achsantrieb, wie einen Tauchspulenantrieb, o. dgl., insbesondere um einen sogenannten Fast-Tool-Antrieb, um das Drehwerkzeug 3D insbesondere in Abhängigkeit von der Drehlage der Linse 2 und/oder in Abhängigkeit des Abstands des Drehwerkzeugs 3D von der Drehachse der Werkstücksspindel 3A in seiner Axiallage bzw. Z-Achse zu steuern bzw. schnell vor- und zurückzubewegen. Der Antrieb 3C gestattet eine vorzugsweise lineare und/oder gesteuerte bzw. geregelte Bewegung des Drehwerkzeugs 3D und bildet daher vorzugsweise eine gesteuerte Z-Achse,

Die Richtung der Z-Achse einerseits und die Richtung der W-Achse bzw. die axiale Ausrichtung der Dreh- bzw. Rundachse C andererseits können parallel zueinander oder geneigt zueinander verlaufen und/oder zueinander einstellbar sein. Bei einer relativen Neigung ist diese vorzugsweise derart gering, dass das bevorzugte Stirndrehen zur Bearbeitung des Werkstücks bzw. der Linse 2 in gewünschter bzw. erforderlicher Weise noch erfolgen kann.

Der Begriff "Achse" wird bei der vorliegenden Erfindung besonders bevorzugt im Sinne der Terminologie bei CNC-Steuerungen (numerischen bzw. rechnergestützten Steuerungen) als eine gesteuerte oder geregelte bzw. gerechnete Bewegungsachse, wie eine Linearachse oder Rundachse, verstanden. Dies gilt insbesondere für einzelne oder alle Teile einer Bearbeitungseinrichtung und/oder mehrere Bearbeitungseinrichtungen bzw. für die vorschlagsgemäße Vorrichtung 1 insgesamt.

Das Fräswerkzeug 3F und der zugeordnete Fräsantrieb 3 E sind in Fig. 1 nur schematisch angedeutet. Die Ausrichtung der Rotations- bzw. Drehachse des Fräswerkzeugs 3F verläuft vorzugsweise quer oder senkrecht zur axialen Richtung der Dreh- bzw. Rundachse C der Werkstückspindel 3A. Das Fräswerkzeug 3F kann je nach Bedarf und Ausführung mit seiner Ausrichtung der Drehachse auch schräg geneigt zur axialen Richtung der Dreh- bzw. Rundachse C der Werkstückspindel 3A ausgerichtet oder schwenkbar sein und/oder relativ zur Linse 2, beispielsweise durch entsprechendes Bewegen der Werkstückspindel 3A und/oder des Fräsantriebs 3E bzw. Fräswerkzeugs 3F, zugestellt werden.

Im dargestellten und bevorzugten Ausführungsbeispiel ist die Bearbeitungseinrichtung 3 vorzugsweise zweistufig ausgeführt mit einem gröber arbeitenden Fräswerkzeug 3F zur gröberen Bearbeitung (Vorbearbeitung) und einem feiner arbeitenden Drehwerkzeug 3D zur feineren Bearbeitung (Feinbearbeitung bzw. Hauptbearbeitung). Bei Bedarf kann die Bearbeitung durch Fräsen jedoch auch ganz entfallen. Dies führt zu einer Vereinfachung der Vorrichtung 1 bzw. Bearbeitungseinrichtung 3 und gestattet einen kompakteren und/oder kostengünstigeren Aufbau. Bedarfsweise kann das Drehen in zwei Schritten, wie einem gröberen Vordrehen und späterem Feindrehen, vorzugsweise mit dem selben Drehwerkzeug 3D gegebenenfalls aber auch mit unterschiedlichen Drehwerkzeugen, erfolgen.

Insbesondere kann beispielsweise in der Bearbeitungseinrichtung 3 eine Bearbeitung erfolgen bzw. ein Aufbau vorgesehen sein, wie in der EP 0 849 038 A2 oder DE 10 2009 011 194 A2 beispielsweise beschrieben.

Die spanende bzw. formgebende Bearbeitung erfolgt vorzugsweise unter Zugabe von Flüssigkeit, wie einer Kühlemulsion o. dgl.

Vorzugsweise weist die Vorrichtung 1, hier insbesondere die Bearbeitungseinrichtung 3, auch eine Markiereinrichtung 3G, beispielsweise einen Laser, auf, um die Linse 2 beispielsweise mit entsprechenden Daten, Markierungen o. dgl., zu markieren. Hierauf wird später noch näher eingegangen. Die Markiereinrichtung 3G ist vorzugsweise wie in der EP 1 955 811 A1 dargestellt, aufgebaut und/oder ausgebildet.

Bedarfsweise erfolgt in der Bearbeitungseinrichtung 3 auch eine (erste) Randbearbeitung der Linse 2. Jedoch kann für die Randbearbeitung alternativ oder zusätzlich auch eine zusätzliche, nicht dargestellte Bearbeitungseinrichtung, wie ein sogenannter Edger o. dgl., vorgesehen sein.

Es ist auch möglich, dass die Vorrichtung 1 bzw. Bearbeitungseinrichtung 3 derart ausgebildet ist, dass die Linse 2 nach der eigentlichen formgebenden Bearbeitung und nach einem Beschichten erneut spanend bzw. formgebend bearbeitet werden kann, insbesondere zur Randbearbeitung der Linse 2 bzw. Fertigbearbeitung des Rands der Linse 2.

Die Vorrichtung 1 weist zusätzlich zur Bearbeitungseinrichtung 3 vorzugsweise eine Poliereinrichtung 4 zum Polieren bzw, Endbearbeiten der zuvor in der Bearbeitungseinrichtung 3 bearbeiteten Linse 2 bzw. dieses Linsenrohlings auf. Die Poliereinrichtung 4 ist im in Fig. 1 dargestellten Ausführungsbeispiel vorzugsweise benachbart zu und/oder seitlich neben der Bearbeitungseinrichtung 3 angeordnet.

Die Poliereinrichtung 4 kann ein gemeinsames Gehäuse mit der Bearbeitungseinrichtung 3 oder ein davon getrenntes Gehäuse aufweisen.

Die Poliereinrichtung 4 ist besonders bevorzugt wie in der DE 10 2007 042 667 A1 beschrieben aufgebaut oder ausgebildet, wobei die Poliereinrichtung 4 gemäß der vorliegenden Erfindung bedarfsweise auch nur zur Bearbeitung einer Linse 2 und nicht zur simultanen Bearbeitung von zwei Linsen 2 ausgebildet sein kann, insbesondere also nur einen Antrieb zum Rotieren der Linse 2 aufweisen kann.

Die Poliereinrichtung 4 weist beim Darstellungsbeispiel vorzugsweise eine Werkstückspindel 4A mit einer Aufnahme 4B auf. Die Werkstückspindel 4A kann grundsätzlich ähnlich oder baugleich wie die Werkstückspindel 3A in der Bearbeitungseinrichtung 3 aufgebaut und/oder in X-Richtung (Quervorschub) verfahrbar und/oder wie durch Pfeil S angedeutet schwenkbar sein. Ergänzend wird daher auf die Beschreibung zur Werkstückspindel 3A verwiesen. Insbesondere dient die Werkstückspindel 4A ebenso als Antrieb, um die Linse 2 in Rotation für die Bearbeitung, hier das Polieren, zu versetzen, und/oder dient der Zustellung der Linse 2 zu einem Polierwerkzeug 4D. Insbesondere handelt es sich bei der Werkstückspindel 4A um einen einfachen Drehantrieb, beispielsweise einen Motor mit einem Riemenantrieb, um die Linse 2 in Rotation für die Bearbeitung bzw, das Polieren zu versetzen. Besonders bevorzugt wird die Linse 2 bzw. das Blockstück 2A ohne definierte Drehlage aufgenommen und/oder lediglich mit einer konstanten (je nach Bedarf gegebenenfalls gesteuerten oder geregelten) Drehzahl rotiert.

Das Polieren kann grundsätzlich auch erst nach dem Abblocken, also nach einem Lösen der Linse 2 vom zugeordneten Blockstück 2A erfolgen. In diesem Fall wird die Linse 2 vorzugsweise direkt eingespannt.

Das Einspannen der Linse 2 bzw. des Blockstücks 2A in die Werkstückspindel 4A bzw. deren Aufnahme 4B erfolgt vorzugsweise wiederum von Hand, also manuell von einem nicht dargestellten Bediener. Dementsprechend erfolgt vorzugsweise auch ein manuelles Umspannen von der Werkstückspindel 3A zur Werkstückspindel 4A. Dieses Umspannen kann, insbesondere ebenso wie das Einspannen an sich, grundsätzlich auch automatisiert bzw. selbsttätig mittels einer entsprechenden Manipulier- bzw. Spanneinrichtung durch die Vorrichtung 1 erfolgen.

Die separaten Antriebe bzw. Werkstückspindeln 3A und 4A und/oder Aufnahmen 3B und 4B für die Bearbeitungseinrichtung 3 einerseits und die Poliereinrichtung 4 andererseits ermöglichen eine unabhängige Bearbeitung (das Polieren wird auch als Bearbeiten, insbesondere als geometrische bzw. mechanische Endbearbeitung der Fläche, verstanden) in den beiden Einrichtungen 3 und 4, so dass der Durchsatz der Vorrichtung 1 an bearbeiteten Linsen 2 entsprechend höher ist verglichen mit einer gemeinsamen Werkstückspindel für beide Einrichtungen 3 und 4. Jedoch kann grundsätzlich an Stelle der separaten bzw. zusätzlichen Werkstückspindel 4A für die Poliereinrichtung 4 lediglich eine bzw. die Werkstückspindel 3A gemeinsam für beide Einrichtungen 3 und 4 eingesetzt werden. Bedarfsweise kann das Polieren in der Poliereinrichtung 4 auch simultan für mehrere Linsen 2 gleichzeitig und/oder in mehreren Bearbeitungsschritten erfolgen.

Vorzugsweise weist die Poliereinrichtung 4 mindestens einen Polierantrieb 4C mit mindestens einem zugeordneten Polierwerkzeug 4D als Bearbeitungswerkzeug auf. Der Polierantrieb 4C kann das Polierwerkzeug 4D insbesondere in Drehung versetzen, wie durch Pfeil B angedeutet.

Besonders bevorzugt ist das Polierwerkzeug 4D insbesondere mit einer vorbestimmten Kraft gegen die zu bearbeitende Linse 2 bzw. das Werkstück drückbar bzw. anstellbar, hier beim Darstellungsbeispiel in Z-Richtung. Das Andrücken bzw. Anstellen kann beispielsweise pneumatisch, durch Federkraft oder auf sonstige geeignete Art und Weise erfolgen.

Zusätzlich oder alternativ kann der Polierantrieb 4C bzw. das Polierwerkzeug 4D bedarfsweise auch in X-Richtung bewegbar bzw. verschiebbar sein, insbesondere also eine gesteuerte X-Achse bilden oder aufweisen, insbesondere zur Relativverstellung (Quervorschub) relativ zum Werkstück bzw. zur Linse 2.

Zusätzlich oder alternativ zu der möglichen Schwenkbewegung S des Werkstückantriebs bzw. des Werkstücks kann sich das Polierwerkzeug 4D vorzugsweise über ein entsprechendes Gelenk, wie ein Kugelgelenk oder Kardangelenk, in seiner Neigung gelenkig an die Oberfläche der zu bearbeitenden Linse 2 anpassen.

Dargestellt ist ein einziger Polierantrieb 4C mit einem einzigen Polierwerkzeug 4D. Selbstverständlich können auch mehrere Antriebe und/oder Werkzeuge zum Einsatz kommen. Insbesondere kann der Polierantrieb 4C auch mehrachsig ausgebildet oder gelagert sein. Beispielsweise kann die Poliereinrichtung 4 aufgebaut sein oder arbeiten, wie in der DE 10 2007 042 667 A1 beschrieben.

Das Polieren erfolgt vorzugsweise durch Läppen, insbesondere also unter Einsatz einer entsprechende Reibkörper enthaltenden Flüssigkeit, wie einer sogenannten Poliermilch o. dgl. Alternativ oder zusätzlich kann das Polieren auch durch Feinschleifen erfolgen, Insbesondere kann anstelle des Läppens auch nur ein reines Feinschleifen zur Endbearbeitung der Linse 2 insbesondere vor einer anschließenden Beschichtung der Linse 2 erfolgen.

Die polierten bzw. endbearbeiteten Linsen 2 werden vorzugsweise beschichtet, insbesondere mittels der Vorrichtung 1 bzw. einer darin angeordneten Beschichtungseinrichtung (diese würde vorzugsweise auch eine Bearbeitungseinrichtung im Sinne der vorliegenden Erfindung darstellen) oder einer sonstigen (nicht dargestellten) Vorrichtung.

Grundsätzlich können Werkstück und Werkzeug bei den beschriebenen Bearbeitungen, insbesondere bei der spanenden bzw. formgebende Bearbeitung und/oder bei dem Polieren, auch vertauscht bzw. kann eine kinematische Umkehr vorgesehen werden.

Die Vorrichtung 1 weist optional weiter eine Reinigungseinrichtung 5 mit einem Reinigungsraum 5A auf, in dem die zuvor bearbeitete Linse 2 gereinigt werden kann. Die Reinigungseinrichtung 5 ist hier nach bevorzugter Lehre separat - also getrennt von den Einrichtungen 3 und 4 - ausgebildet. Grundsätzlich kann sie auch beispielsweise in die Poliereinrichtung 4 integriert sein.

Vorzugsweise erfolgt das Reinigen manuell, also nicht automatisiert. Beispielsweise wird die noch geblockte Linse 2 oder die von dem zugeordneten Blockstück 2A bereits gelöste Linse 2 nach dem Bearbeiten, insbesondere nach dem spannenden Bearbeiten in der Bearbeitungseinrichtung 3 und/oder nach dem Polieren in der Poliereinrichtung 4, in der Reinigungseinrichtung 5 gereinigt, vorzugsweise gewaschen oder gespült. Jedoch kann das Reinigen bei Bedarf auch automatisiert und/oder selbsttätig und/oder unter Einsatz einer nicht dargestellten Manipuliereinrichtung und/oder einer der Werkstückspindeln 3A oder 4A bzw. Kreuzschlitten erfolgen.

Die Vorrichtung 1 kann alternativ oder zusätzlich eine beispielhaft angedeutete, weitere Bearbeitungseinrichtung 6 mit einem weiteren Bearbeitungsraum 6A aufweisen. In der weiteren Bearbeitungseinrichtung 6 kann beispielsweise ein Beschichten der bearbeiteten Linse 2 erfolgen, wie bereits angesprochen.

Alternativ kann in der weiteren Bearbeitungseinrichtung 6 oder einer zusätzlichen (nicht dargestellten) Bearbeitungseinrichtung ein Aufblocken der Linse 2 auf dem zugeordneten Blockstück 2A und/oder ein Abblocken der Linse 2 und/oder ein Bearbeiten des Blockstücks 2A erfolgen. Bezüglich der optionalen Bearbeitung des Blockstücks 2 ist anzumerken, dass hierbei eine insbesondere spannende oder sonstige formgebende Bearbeitung vorgesehen sein kann, beispielsweise um das Blockstück 2A an eine besonders zu bearbeitende Linse 2, beispielsweise mit einem zusätzlichen Prisma zur Korrektur von Strabismus, anzupassen. Diese oder eine sonstige Bearbeitung des Blockstücks 2 kann in der weiteren Bearbeitungseinrichtung 6 oder einer zusätzlichen, nicht dargestellten Bearbeitungseinrichtung und/oder in der Bearbeitungseinrichtung 3 erfolgen, wobei je nach Bedarf auch ein zusätzliches Bearbeitungswerkzeug mit einem ggf. zusätzlichen Antrieb eingesetzt werden kann.

Unter "Bearbeitungseinrichtung" wird im Rahmen der vorliegenden Erfindung generell jede Einrichtung verstanden, die eine Bearbeitung der Linse leistet bzw. gestattet. Insoweit umfasst der Begriff "Bearbeitungseinrichtung" auch eine Poliereinrichtung, eine Reinigungseinrichtung und/oder eine Gravierenrichtung. Im Speziellen gibt es aber auch die Begrifflichkeit "Bearbeitungseinrichtung zum spannen oder sonstigen formgebenden Bearbeiten der Linse". Hierbei handelt es sich insbesondere um die oben angegebenen speziellen Bearbeitungseinrichtungen mit einem Fräswerkzeug, mit einem Drehwerkzeug oder mit einem anderen formgebenden Bearbeitungswerkzeug.

Die Vorrichtung 1 weist eine Steuereinrichtung 7 jedenfalls zum Steuern der formgebenden Bearbeitung der Linse 2 bzw. der Bearbeitungseinrichtung 3 und, so vorhanden, der Poliereinrichtung 4 auf. Die Steuereinrichtung 7 kann auch weitere Einrichtungen 5 und 6 der Vorrichtung 1 steuern. Die Steuereinrichtung 7 ist in Fig. 1 schematisch angedeutet. Einzelheiten der Steuereinrichtung 7 werden weiter unten erläutert.

Die Steuereinrichtung 7 ist eingangsseitig mit einer Eingabeeinrichtung 8 der Vorrichtung 1 versehen bzw. verbunden, die so ausgestaltet ist, dass gewünschte optische Daten OD der Linse 2 unmittelbar eingegeben werden können. Die optischen Daten OD, die mit der Eingabeeinrichtung 8 eingegeben werden, werden an die Steuereinrichtung 7 weitergegeben, die daraus vorzugsweise geometrische Daten GD der Linse 2 bestimmt und/oder Linsen-Fertigungsdaten FD bestimmt bzw. erzeugt.

Die Eingabeeinrichtung 8 weist im Ausführungsbeispiel vorzugsweise ein Bedienfeld 8A zur manuellen Eingabe der gewünschten optischen Daten OD und/oder eine Anzeigeeinrichtung 8B, hier in Form eines Bildschirms, insbesondere zur Benutzerführung, auf. Die Eingabeeinrichtung 8 kann bedarfsweise auch einen Touch-Screen alternativ oder zusätzlich zu den Bedienfeld 8A zur Eingabe der gewünschten optischen Daten OD aufweisen. Dieser Touch-Screen kann bedarfsweise durch die Anzeigeinrichtung 8B und/oder einen zusätzlichen Bildschirm gebildet sein. Wichtig ist, dass die Eingabeeinrichtung 8 derart ausgebildet ist, dass die optischen Daten OD auf einfache, gut verständliche Weise eingegeben werden können.

Die Ajizeigeeinrichtung 8B dient vorzugsweise der Benutzerführung bei der Eingabe der gewünschten optischen Daten OD und/oder zur (leichten) Bedienung der Vorrichtung 1. Besonders bevorzugt weist die Vorrichtung 1 nur eine einzige Anzeigeeinrichtung 8B oder nur einen einzigen Bildschirm auf, um einen einfachen, kostengünstigen Aufbau zu ermöglichen und/oder eine besonders einfache Bedienung, auch durch zumindest weitgehend ungeschultes Personal zu ermöglichen oder erleichtern.

Bei der Anzeigeeinrichtung 8B kann es sich bevorzugt um ein Dialogfeld handeln, insbesondere um einen Touch-Screen. Dann ist faktisch das Bedienfeld 8A, das in Fig. 1 als Tastatur angedeutet ist, in den Bildschirm 8B integriert. Selbstverständlich ist auch eine eher traditionelle Ausstattung mit einer Tastatur als Bedienfeld 8A ebenfalls möglich.

Angedeutet ist in Fig. 1 auch eine Variante, bei der die Eingabeeinrichtung 8 eine Schnittstelle 8C für eine elektronische Eingabe oder Aufnahme der gewünschten optischen Daten OD aufweist. Hierbei kann es sich beispielsweise um einen Kartenleser, eine Funk-Schnittstelle oder einen elektrischen Anschluss, wie eine USB-Schnittstelle handeln.

Die Vorrichtung 1 bzw. Steuereinrichtung 7 weist vorzugsweise ein Designmodul 7A zur Bestimmung bzw. Erzeugung von geometrischen Daten GD und/oder Fertigungsdaten FD aus den gewünschten optischen Daten OD. Fig. 1 lässt erkennen, wie von der Eingabeeinrichtung 8 die optischen Daten OD vorzugsweise an eine erste Stufe der Steuereinrichtung 7, nämlich an das Designmodul 7A übermittelt werden. Im dargestellten und bevorzugten Ausführungsbeispiel enthält das Designmodul 7A ein Designmodell, mit dessen Hilfe aus den eingegeben optischen Daten OD in einem Bestimmungsvorgang geometrische Daten GD der herzustellenden Linse 2 entwickelt oder erzeugt werden. Das Designmodell oder eine Gruppe von vorzugsweise abgespeicherten Designmodellen führt insbesondere im Designmodul 7A vorzugsweise mit der im allgemeinen Teil der Beschreibung erläuterten Struktur von Algorithmen oder durch eine Näherung, Interpolation o. dgl. zu den geometrischen Daten GD der Linse 2.

Vorzugsweise bezieht sich der Begriff gewünschte "optische Daten" auf die ggf. stark individualisierten optischen Daten der für den jeweiligen Patienten bestimmten Linse, die typischer Weise von einem Optiker ermittelt werden, bzw. auf die optischen Solldaten der zu fertigenden Linse. Insbesondere umfassen die "optischen Daten" bei der vorliegenden Erfindung die sphärische optische Wirkung, beispielsweise in Dioptrien, Angaben zu einem Zylinder zur Korrektur von Astigmatismus (beispielsweise Stärke der Krümmung, insbesondere in Dioptrien und Lage der Zylinderachse beispielsweise in Grad), Angaben zu einem Prisma, insbesondere zur Korrektur von Strabismus (beispielsweise Neigung oder Stärke des Prismas, Lage und Form des Prismas, Prismenachse o. dgl.), den Pupillenabstand (Abstand der Augen für die Positionierung der Linsen im Brillengestell), die Fittinghöhe (Höhe von der Unterkante der Linse zum Augenmittelpunkt), die Randform (beispielsweise rund unter Angabe des Durchmessers oder oval unter Angabe von kleiner und gro-βer Ellipsenachse oder eine sonstige Form) und/oder Angaben zur Winkellage der Linse bezüglich der Augen bzw. im Brillengestell (pantoskopischer Winkel, Fassungsscheibenwinkel zur Angabe der Neigung der Linsenebene zur optischen Achse des Auges in der Horizontalen o. dgl.).

Der Begriff "geometrische Daten" der Linse bezeichnet erfindungsgemäß die Daten oder Werte, die geometrische Eigenschaften der Linse beschreiben, wie Durchmesser, Dicke ggf. an verschiedenen Stellen, Krümmung an verschiedenen Stellen, etc. Die "geometrischen Daten" stellen insbesondere die Daten bzw. Werte dar, die die (fertig) bearbeitete Linse oder eine Fläche der Linse aufweisen sollte oder muss, um die gewünschten optischen Daten bzw. Eigenschaften zu erreichen. Die geometrischen Daten können sich beispielsweise nur auf eine gerade zu bearbeitende bzw. zu fertigende Seite, wie die Vorder- oder Rückseite der Linse, aber auch auf beiden Seiten, den Rand und/oder die Dicke bzw. den Dickenverlauf der Linse beziehen. Beispielsweise können die geometrischen Daten einen gewünschten Flächenverlauf bzw. eine gewünschte Flächenform der zu bearbeitenden Linse angeben oder festlegen. Dies kann beispielsweise durch entsprechende Parameter, wie Radius einer Sphäre und/oder eines Torus, durch eine Funktion, eine Näherung, durch Koordinatenwerte, durch CAD-Daten und/oder dazu korrespondierende Werte o. dgl. erfolgen. Die geometrischen Daten können beispielsweise auch eine Dicke, verschiedene Dickenwerte oder einen Dickenverlauf der zu fertigenden Linse umfassen. Die geometrischen Daten können auch einen Randverlauf, insbesondere in der Linsenebene entlang des Rands, und/oder eine Randform, beispielsweise die Ausbildung einer Fase oder mehrerer Fasen entlang des Rands, und/oder die Ausbildung einer Nut (Lage, Form) entlang der Randkante o. dgl. umfassen. Bei den geometrischen Daten handelt es sich insbesondere um Daten der zu fertigenden Linse, also um Solldaten bzw. Sollwerte o. dgl., auch wenn teilweise nur eine Näherung und keine vollständige mathematische Beschreibung oder funktionelle Darstellung möglich ist.

Insbesondere betreffen die geometrischen Daten also eine Fertigfläche der Linse bzw. die fertige Linse. Die vorliegende Erfindung befasst sich insbesondere mit der Herstellung von Linsen mit Freiformflächen, wobei sich "Freiformflächen" im Sinne der vorliegenden Erfindung insbesondere dadurch auszeichnen, dass sich keine geschlossene mathematische Darstellung oder nur eine näherungsweise mathematische Darstellung, beispielsweise durch bikubische oder höhere Splines o. dgl., möglich ist.

Der Begriff "Fertigungsdaten" bezieht sich erfindungsgemäß insbesondere auf die Daten, mit denen vorzugsweise eine konkrete Bearbeitungseinrichtung angesteuert wird, um einen bestimmten Bearbeitungsvorgang auszuführen. Es sind dies insbesondere Daten, die die Bewegung entsprechender Bearbeitungswerkzeuge und/oder entsprechende Bearbeitungsvorgänge steuern. Beispielsweise kann es sich bei den Fertigungsdaten um sogenannte CNC-Daten o. dgl. handeln. Alternativ oder zusätzlich können die Fertigungsdaten beispielsweise auch geometrische Daten von Zwischenschritten bei der Bearbeitung oder unterschiedlichen Bearbeitungsvorgängen darstellen oder umfassen bzw. enthalten und/oder die geometrischen Daten ggf. ganz ersetzen.

Weiter können die geometrischen Daten und/oder Fertigungsdaten auch ein gewisses Übermaß oder gegebenenfalls Untermaß - insbesondere im Hinblick auf nachfolgende Bearbeitungsschritte, wie Schleifen, Polieren oder Beschichten - enthalten oder berücksichtigen,

Unter "Designmodell" ist erfindungsgemäß insbesondere das zu verstehen, was in der Fachwelt "lens design" genannt wird. Das Designmodell kann spezifisch für einen Lieferanten der Linsenrohlinge sein. Insbesondere umfasst es die Gesamtheit der Algorithmen oder wesentliche Algorithmen, mit denen aus den gewünschten optischen Daten die geometrischen Daten der speziellen Linse ermittelt werden. Die geometrischen Daten hängen insbesondere von dem Linsenmaterial, Brechungsindex, Größe, Form, Dicke, Linsentyp, Hersteller und/oder Art der Verblockung oder dergleichen (diese oder ähnliche, sich insbesondere auf den Linsenrohling bzw. die Linse im Ausgangszustand bzw. vor der Bearbeitung beziehende Angaben und/oder eine eindeutige Identifikation werden vorzugsweise als "Ausgangsdaten" erfindungsgemäß bezeichnet, die insbesondere linsenspezifisch sind) und/oder ggf. von evtl. Approximationen des Designmodells ab. Auf dem Weg vom Linsenrohling zur fertigen Linse können ggf auch verschiedene Wege eingeschlagen werden. Der vom jeweiligen Hersteller des Linsenrohlings und/oder der Bearbeitungsmaschine konkret gewählte Bearbeitungsweg ist insbesondere im Designmodell und/oder bei der Erzeugung der Fertigungsdaten elektronisch umsetzbar bzw. berücksichtigt.

Aus den gewünschten bzw. eingegebenen optischen Daten OD werden die geometrischen Daten GD in einem ersten Schritt und die Fertigungsdaten FD in einem zweiten Schritt oder alternativ auch direkt die Fertigungsdaten FD ― ggf. auch unterschiedliche Fertigungsdaten FD für unterschiedliche Bearbeitungsschnitte ― von der Vorrichtung 1, von der Steuereinrichtung 7 und/oder mittels des Designmoduls 7A bzw. Designmodells ermittelt, bestimmt und/oder erzeugt, Hierbei werden insbesondere auch Ausgangsdaten der zu bearbeitenden Linse 2 bzw. des zu bearbeitenden Linsenrohlings, wie Linsentyp, Größe, Form, Dicke, Linsenmaterial, Brechungsindex und/oder Art der Verblockung o. dgl., berücksichtigt. Diese Ausgangsdaten können bedarfsweise insbesondere über die Eingabeeinrichtung 8 eingegeben und/oder ausgewählt und/oder von der Vorrichtung 1 oder Steuereinrichtung 7 automatisch erfasst oder bestimmt werden. Insbesondere kann die Steuereinrichtung 7 bzw. das Designmodul 7A in Abhängigkeit von diesen Ausgangsdaten des Linsenrohlings ein entsprechendes oder geeignetes Designmodell auswählen.

Alternativ oder zusätzlich kann die Vorrichtung 1 bzw. die Steuereinrichtung 7 oder das Designmodul 7A derart ausgebildet sein, dass in Abhängigkeit von den optischen Daten GD und/oder den daraus resultierenden geometrischen Daten GD der optimale Linsenrohling bzw. Linsentyp - insbesondere aus einer vorgegebenen oder vorgebbaren Gruppe von verfügbaren Linsenrohlingen oder -typen - selbsttätig auswählbar und ggf. dem Bediener insbesondere anzeigbar ist.

Der Bediener kann dann den entsprechenden Linsenrohling in die erste Bearbeitungseinrichtung, hier die Bearbeitungseinrichtung 3 bzw. deren Werkstückspindel 3A bzw. deren Aufnahme 3B einspannen. Sollte der angeforderte Linsenrohling gerade nicht verfügbar sein, kann der Bediener dies vorzugsweise eingeben, so dass dann von der Vorrichtung 1 bzw. Steuerung 7 ein anderer geeigneter Linsenrohling angefordert werden kann, Jedoch sind hier auch andere Abläufe oder Benutzerführungen möglich. Es ist anzumerken, dass der Begriff "Benutzerftihrung" insbesondere die Führung eines nicht dargestellten Bedieners, besonders bevorzugt über die Anzeigeeinrichtung 8B oder sonstige Einrichtungen, hinsichtlich der Bedienung der Vorrichtung 1 und/oder Zuführung von Verbrauchsmaterialien, Werkzeugen oder dergleichen umfasst.

Das Designmodell ist vorgebbar, eingebbar und/oder änderbar, dies hängt insbesondere von der Ausgestaltung der Steuereinrichtung 7 bzw. des Designmoduls 7A ab. Bevorzugt ist eine bestimmte Gruppe von Designmodellen in der Vorrichtung 1, in der Steuereinrichtung 7 oder im Designmodul 7A gespeichert und aus diesen Designmodellen kann je nach Bedarf ausgewählt werden.

Das Bestimmen von Linsendaten aus den optischen Daten OD erfolgt nach bevorzugter Lehre so, dass für jede Linse 2 ein eigener Bestimmungsvorgang für die geometrischen Daten GD bzw. Fertigungsdaten FD erfolgt. Ein separater Bestimmungsvorgang zur Bestimmung der geometrischen Daten GD aus den optischen Daten OD oder direkt der Fertigungsdaten FD aus den optischen Daten OD für jede einzelne Linse 2 ist von besonderer Bedeutung, auch um eine eindeutige Abrechnung generieren zu können. Jeder Bestimmungsvorgang von geometrischen Daten GD bzw. Fertigungsdaten FD wird vorzugsweise als separater Bestimmungsvorgang gezählt und abgerechnet und/oder nur ausgeführt, wenn ein entsprechender Freischaltcode oder eine sonstige Freigabe o. dgl. vorliegt. Die Vorrichtung 1 bzw. Steuereinrichtung 7 oder das Designmodul 7A ist vorzugsweise derart ausgebildet, dass ein Bestimmungsvorgang nur nach entsprechender Freigabe ausgeführt und/oder jeder Bestimmungsvorgang gezählt und/oder abgerechnet wird. Die Eingabe eines entsprechenden Freischaltcodes kann insbesondere über die Eingabeeinrichtung 8 bzw. die Schnittstelle 8C oder sonstige geeignete Art und Weise erfolgen,

Vorzugsweise weist die Vorrichtung 1 bzw. Steuereinrichtung 7 vorzugsweise weiter ein Fertigungsmodul 7B auf, mit dem aus den bestimmten geometrischen Daten GD der Linse 2 nun die Fertigungsdaten FD für die Bearbeitungseinrichtung 3 und gegebenenfalls auch für die Poliereinrichtung 4 erzeugt werden. Auch für die weitere Bearbeitungseinrichtungen 5 oder 6 der Vorrichtung 1 können die entsprechenden Fertigungsdaten FD mittels des Fertigungsmoduls 7B erzeugt werden.

Außerdem erfolgt im dargestellten Ausführungsbeispiel eine Aufteilung der Fertigungsdaten FD vorzugsweise in verschiedene Bearbeitungsschritte. Dies kann beispielsweise über eine in Fig. 1 angedeutete Ablaufsteuerung 7C der Vorrichtung 1 bzw. Steuerung 7 oder auf sonstige geeignete Weise erfolgen. In die Vorrichtung 1 bzw. Steuereinrichtung 7 kann ferner eine Benutzerführeinrichtung 7D integriert sein, die dann insbesondere über die Anzeigeeinrichtung 8B der Eingabeeinrichtung 8 die Rückkopplung an den Benutzer bzw, Bediener bzw. die Benutzerführung ermöglicht,

Grundsätzlich ist es auch möglich, die Fertigungsdaten FD ohne den Zwischenschritt der geometrischen Daten GD der Linse 2 direkt aus den gewünschten optischen Daten OD der Linse 2 entstehen zu lassen bzw. zu erzeugen, wie bereits erwähnt. Das hängt insbesondere von der Ausgestaltung und/oder Programmierung der Vorrichtung 1 bzw. Steuereinrichtung 7 ab.

Im dargestellten und bevorzugten Ausführungsbeispiel weist jede einzelne Einrichtung 3, 4, 5 und 6 vorzugsweise eine ihr zugeordnete Einrichtungssteuerung 7E auf. Diese Einrichtungssteuerungen 7E sind im dargestellten und bevorzugten Ausführungsbeispiel vorzugsweise in die jeweilige Einrichtung 3, 4, 5 und 6 integriert. Sie können aber auch zumindest teilweise oder vollständig in die Steuereinrichtung 7 oder sonstige Komponenten der Vorrichtung 1 integriert sein oder davon gebildet sein. Üblicherweise wird es sich bei den Einrichtungssteuerungen 7E um CNC-Steuerungen handeln.

Generell ist anzumerken, dass die Steuereinrichtung 7 durch eine speicherprogrammierbare Steuerung, CNC-Steuerung (numerische bzw. rechnergestüzte Steuerung) oder dergleichen gebildet sein oder enthalten kann und/oder eine derartige Steuerung steuern kann. Die Steuereinrichtung 7 bzw. Teile der Steuerung können auch für die Einrichtungen 3 bis 6 beliebig zusammengefasst und/oder beliebig auf die Einrichtungen 3 bis 6 verteilt oder nur von diesen gebildet sein.

Das dargestellte und bevorzugte Ausführungsbeispiel zeigt die Vorrichtung 1 als kompaktes Bearbeitungszentrum, hier und nach bevorzugter Lehre in oder mit einem gemeinsamen Gehäuse 9. Dadurch ist die erfindungsgemäße Vorrichtung 1 an einer passenden Stelle vorzugsweise komplett mit allen Einrichtungen installierbar. Insbesondere handelt es sich hier um eine kompakte Vorrichtung 1 in Form eines an jedem beliebigen Ort aufstellbaren Bearbeitungszentrums.

Vorzugsweise ist bzw. sind die Steuereinrichtung 7 und/oder die Eingabeeinrichtung 8 in die Vorrichtung 1 bzw. deren Gehäuse 9 fest eingebaut, integriert oder damit fest verbunden und/oder fest daran ― insbesondere über ein nicht dargestelltes Kabel ― angeschlossen.

Das dargestellte und bevorzugte Ausführungsbeispiel zeigt in Fig. 1 schematisch angedeutet auch noch einen Tank 10, in dem eine erforderliche Flüssigkeit, beispielsweise ein Poliermittel, eine Reinigungsflüssigkeit, ein Kühlschmiermittel o. dgl., bevorratet werden kann. Der Tank 10 kann dementsprechend bedarfsweise auch unterteilt sein, Man kann auch den Tank 10 durch mehrere voneinander getrennte Einzeltanks bilden oder ergänzen.

Schließlich zeigt Fig. 1 schematisch angedeutet auch noch eine Aufnahmeeinrichtung 11, die beispielsweise zur Bevorratung von Werkzeugen, Blockstücken, Linsenrohlingen oder dergleichen dienen kann.

Nach bevorzugter Lehre der Erfindung kann die Vorrichtung 1 auch so ausgestaltet sein, dass der Zustand der Vorrichtung 1 und/oder einzelner Einrichtungen 3 bis 6 der Vorrichtung 1 und/oder sonstige Informationsdaten, wie die Zahl der Bestimmungsvorgänge, die Art oder Anzahl der bearbeiteten Linsen 2 o. dgl., aus der Ferne abfragbar und/oder beeinflussbar sind. Das dient insbesondere der Überwachung oder Wartung, ist insbesondere jedoch nicht für den laufenden Betrieb der Vorrichtung 1 bestimmt. Dazu können dann entsprechende Schnittstellen zum Anschluss an das Internet, an ein Telfonnetz oder Funknetz (beispielsweise über ein vorzugsweise integriertes GSM-Modul) oder sonstige Netze vorgesehen sein. Gegebenenfalls kann hierzu auch die Schnittstelle 8C eingesetzt werden.

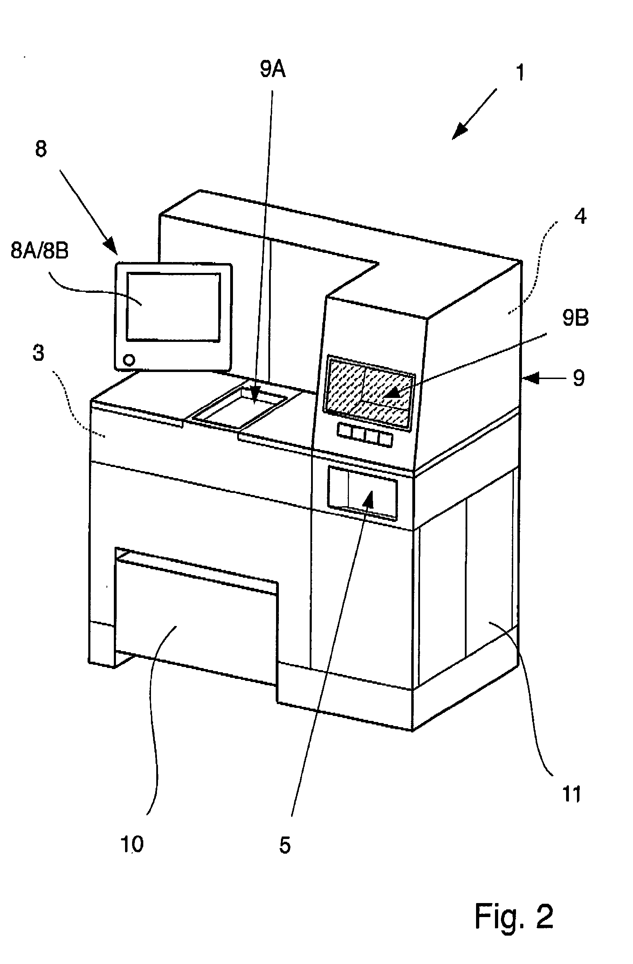

Fig. 2 zeigt in schematischer, perspektivischer Ansicht die erfindungsgemäße Vorrichtung 1 in einer möglichen Ausgestaltung in Form eines Bearbeitungszentrums in dem kompakten Gehäuse 9. Das Gehäuse 9 weist vorzugsweise eine Eingabeklappe 9A für die insbesondere darunter im Gehäuse 9 befindliche, hier lediglich angedeutete Bearbeitungseinrichtung 3, auf, Vorzugsweise rechts im Gehäuse 9 ist die Poliereinrichtung 4 angeordnet. Vorne ist im Bereich der Poliereinrichtung 4 eine Eingabeklappe 9B für die Poliereinrichtung 4 am Gehäuse 9 vorgesehen. Alternativ kann die Eingabeklappe 9B beispielsweise auch neben der Eingabeklappe 9A zumindest im Wesentlichen auf gleicher Höhe oder in einer gemeinsamen Ebene und/oder mit zumindest im Wesentlichen gleicher Orientierung angeordnet sein, wobei die Poliereinrichtung 4 dann vorzugsweise darunter und nicht dahinter angeordnet ist.

Anhand der Darstellung in Fig. 2 ist erkennbar, dass das Umspannen einer Linse 2 bzw. eines Linsenrohlings mit seinem Blockstück 2A von der Bearbeitungseinrichtung 3 in die Poliereinriahtung 4 vorzugsweise manuell, durch eine Bedienungsperson, erfolgt.

Unterhalb der Eingabeklappe 9B bzw. der Poliereinrichtung 4 oder an einer sonstigen geeigneten Stelle ist vorzugsweise eine Öffnung der Reinigungseinrichtung 5 angeordnet. Vorzugsweise unten am Gehäuse 9 ist der Tank 10 angedeutet bzw. angeordnet. Vorzugsweise links oben am Gehäuse 9 befmdet sich die Eingabeeinrichtung 8 mit der Anzeigeeinrichtung 8B und/oder dem Bedienfeld 8A, hier insbesondere in Form eines Touch-Screens.

Die Vorrichtung 1 bzw. deren Gehäuse 9 weist vorzugsweise auch die Aufnahmeeinrichtung 11, insbesondere für Werkzeuge, Blockstücke 2A, Linsen 2 bzw. Linsenrohlinge und/oder sonstige Verbrauchsmittel, auf. Die Aufnahmeeinrichtung 11 ist hier beim Darstellungsbeispiel vorzugsweise seitlich angeordnet.

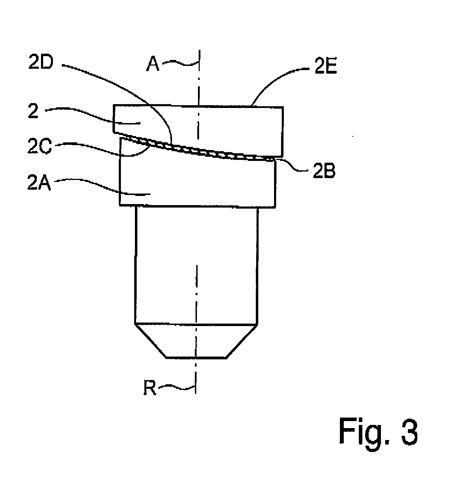

Fig. 3 zeigt in einer nur sehr schematischen Darstellung das Blockstück 2A mit zugeordneter bzw, darauf geblockter Linse 2. Die Linse 2 ist insbesondere mittels eines Blockmaterials 2B mit dem Blockstück 2A verbunden oder verbindbar. Bei dem Blockmaterial 2B handelt es sich beispielsweise um ein bei niedriger Temperatur schmelzendes Material, vorzugsweise eine leicht schmelzende Legierung, einen Kunststoff, einen Klebstoff, eine Klebeschicht, ein Klebeband oder dergleichen,

Die Linse 2 kann mit dem Blockstück 2A bzw. einer Stirnfläche 2C des Blockstücks 2A mehr oder weniger vollflächig oder nur bereichsweise, beispielsweise nur in bestimmten Auflagepunkten oder -bereichen, verbunden oder verbindbar sein.

Die Linse 2 kann sich auf dem Blockstück 2A bzw. deren Stirnfläche 2C, besonders bevorzugt in entsprechenden Auflagepunkten oder Abstützbereichen, vorzugsweise unmittelbar abstützen. Dies ist beispielsweise in der WO 2007/017385 A2 beschrieben, die hiermit diesbezüglich als ergänzende Offenbarung eingeführt wird. Die genannten Auflagepunkte bzw. Abstützbereiche können gegebenenfalls auch erhaben ausgebildet sein und/oder die Stirnfläche 2C kann mit einer oder mehrerer Vertiefungen oder dergleichen versehen sein, so dass das Blockmaterial 2B in den Bereichen zwischen den Auflagepunkten oder Abstützbereichen und/oder in den Vertiefungen oder dergleichen das Blockstück 2A und die Linse 2 in gewünschter Weise verbinden kann. Jedoch kann auch ein Verbinden durch eine quasi vernachlässigbare Klebstoffschicht, Zwischenlage eines Klebebands oder dergleichen, gegebenenfalls auch zwischen den Auflagepunkten bzw. Abschnittsbereichen einerseits und der Linse 2 andererseits erfolgen.

Alternativ kann die Linse 2 auch beabstandet zu dem Blockstück 2A über das Blockmaterial 2B mit dem Blockstück 2A verbunden werden. In diesem Fall muss eine entsprechende axial beabstandete Positionierung, beispielsweise über ein entsprechendes Abstützmittel, wie einen Blockring oder dergleichen, insbesondere wie in der DE 10 2008 022 660 A1 beschrieben, erfolgen, die diesbezüglich ergänzend als Offenbarung hiermit eingeführt wird.

Das Blockstück 2A ist je nach Bedarf einteilig oder mehrteilig ausgebildet. Beispielsweise kann das Blockstück 2A einen abnehmbaren oder trennbaren Kopf aufweisen, der die Stirnseite oder -fläche 2C bildet.

Das Blockstück 2A ist vorzugsweise spanend oder auf sonstige Weise formgebend bearbeitet, insbesondere zur Anpassung der Stirnseite oder -fläche 2C an die zugeordnete, zu bearbeitende Linse 2. Beispielsweise ist das Blockstück 2A bzw. dessen Stirnseite 2C an ein Prisma der Linse 2 bzw, eine prismenartige Ausbildung der Linse 2 und/oder an die dem Blockstück 2A zugewandte Blockseite 2D der Linse 2 - zumindest bereichsweise, insbesondere zumindest in Auflagepunkten oder -bereichen - angepasst, Diese Anpassung wird durch die genannte Bearbeitung des Blockstücks 2 ereicht Hierbei erfolgt insbesondere ein stirnseitiger Materialabtrag am Blockstück 2A.

Die vorgenannte Bearbeitung des Blockstücks 2A erfolgt vorzugsweise in bzw. mittels der Vorrichtung 1 und/oder deren Bearbeitungseinrichtung 3 oder einer weiteren Bearbeitungseinrichtung 6 oder dergleichen. Jedoch kann das Bearbeiten des Blockstücks 2A grundsätzlich auch separat oder getrennt erfolgen.

Das bearbeitete Blockstück 2A wird mit der (weiter) zu bearbeitenden Linse 2 verbunden bzw. verblockt, insbesondere mit Hilfe des Blockmaterials 2B, wie in Fig. 3 angedeutet, oder auf sonstige geeignete Art und Weise.

Beim Verblocken der Linse 2 mit dem Blockstück 2A ist eine (korrekte) Positionierung der Linse 2 auf oder an dem Blockstück 2A bzw. dessen Stirnseite 2C schwierig und/oder wesentlich. Insbesondere ist eine translatorische Positionierung, also eine Positionierung der Linse 2 quer zu einer Einspann- oder Drehachse bzw. Rotationsachse R des Blockstücks 2A erforderlich, insbesondere um die gewünschte Bearbeitungsachse A der Linse 2 entsprechend koaxial auszurichten, also einen Querversatz und/oder eine Schiefstellung zu vermeiden. Weiter ist insbesondere eine korrekte rotatorische Positionierung der Linse 2 an oder auf dem Blockstück 2A wichtig, um eine korrekte Bearbeitung, insbesondere bei nicht-rotations-symmetrischen Linsen 2 zu ermöglichen und/oder eine unerwünschte Schrägstellung der gewünschten Bearbeitungsachse A zu der Rotationsachse R zu vermeiden. Mit anderen Worten, die rotatorische Positionierung dient der Ausrichtung der Drehlage der Linse 2 zu dem Blockstück 2A.

Erst nach korrekter Positionierung bzw. nur bei korrekter Positionierung soll und wird die zu bearbeitende Linse 2 mit dem Blockstück 2A bzw. dessen Stirnseite 2C verbunden bzw. erfolgt das Verblocken.

Anschließend kann die insbesondere spanende bzw. formgebende Bearbeitung der aufgeblockten Linse 2, insbesondere eine Randbearbeitung der Linse 2 und/oder eine Bearbeitung der der Blockseite 2D gegenüberliegenden Bearbeitungsseite 2E der Linse 2, erfolgen.

Um die genannte Positionierung zu erleichtern oder zu ermöglichen, wird das Blockstück 2A bzw. dessen Stirnseite 2C markiert, insbesondere mit Markierungen versehen (die Markierungen sind in Fig. 3 nicht dargestellt). Dieses Markieren erfolgt vorzugsweise unmittelbar nach der spanenden bzw. formgebenden Bearbeitung des Blockstücks 2A und/oder in der Vorrichtung 1 und/oder mittels der Markiereinrichtung 3G oder einer sonstigen Markiereinrichtung.

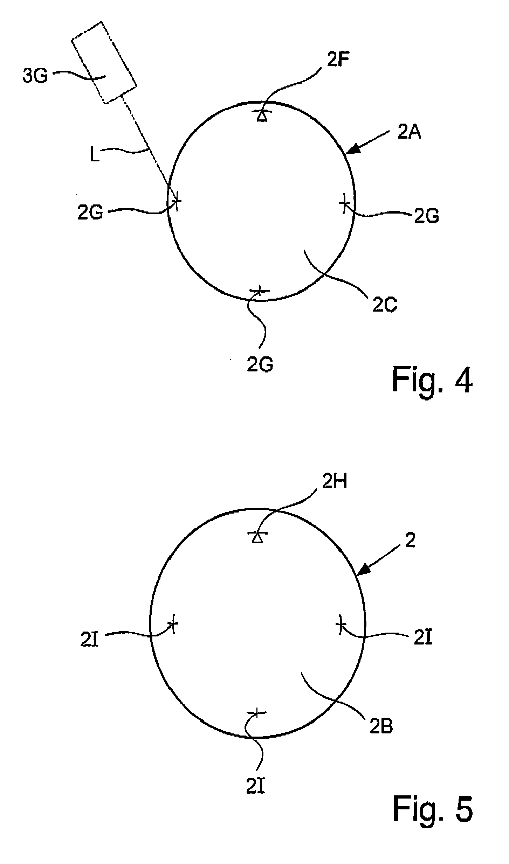

Fig. 4 zeigt in einer schematischen Draufsicht das Blockstück 2A bzw. deren Stirnseite 2C ohne Linse 2, wobei gestrichelt das Markieren, hier vorzugsweise mittels der Markiereinrichtung 3 G bzw. mittels Laserlicht L angedeutet ist. Das Markieren erfolgt vorzugsweise durch die gleiche Markiereinrichtung 3G, die auch dem Markieren von Linsen 2 dient, jedoch kann es sich hierbei auch um eine separate Markiereinrichtung handeln.

Wie bereits erwähnt erfolgt das Markieren des Blockstücks 2A vorzugsweise in der Vorrichtung 1 und/oder mit der gleichen Einspannung des Blockstücks 2A wie beim Bearbeiten des Blockstücks 2A, beispielsweise in der Aufnahme 3B. Die Bearbeitung des Blockstücks 2A erfolgt vorzugsweise mit der Bearbeitungseinrichtung 3, die auch der Bearbeitung der Linsen 2 dient. Bedarfsweise kann jedoch auch eine sonstige oder die weitere Bearbeitungseinrichtung 6 oder dergleichen zum spanenden oder formgebenden Bearbeiten des Blockstücks 2A und/oder Markieren des Blockstücks 2A eingesetzt werden.

Das Blockstück 2A bzw. deren Stirnfläche 2B wird beim Markieren vorzugsweise mit einer oder mehreren Markierungen 2F, 2G versehen bzw. markiert.

Die Markierungen 2F, 2G umfassen vorzugsweise mindestens eine eindeutige bzw. sich von den anderen unterscheidende Markierung 2F, die besonders gekennzeichnet ist, hier durch ein Dreieck oder dergleichen, und/oder der rotatorischen Positionierung der Linse 2 dient, Vorzugsweise unterscheidet sich mindestens eine oder nur genau eine Markierung 2F von den anderen Markierungen 2G, Diese eindeutige Markierung 2F dient insbesondere der rotatorischen Positionierung bzw. einer eindeutigen Identifizierung einer bestimmten Drehlage.

Die Markierungen 2F und 2G sind vorzugsweise entlang eines Kreises oder zumindest teilweise auf einem Kreis angeordnet, wie in der schematischen Draufsicht gemäß Fig. 4 angedeutet. Jedoch sind auch andere Anordnungen der Markierungen 2F, 2G möglich.

Die Markierungen 2F, 2G können beispielsweise zu einem Außendurchmesser der Linse 2 und/oder zu vorzugsweise korrespondierenden Markierungen 2H und 21 der Linse 2, die beispielhaft in der Draufsicht der Linse 2 bzw. deren Blockseite 2D gemäß Fig. 5 schematisch angedeutet sind, korrespondieren. Beispielsweise ist die Linse 2 mit der vorzugsweise eindeutigen Markierung 2H versehen, die insbesondere einer rotatorischen Positionierung bzw, Identifizierung der Drehlage der Linse 2 dient und/oder insbesondere zu der Markierung 2F des Blockstücks 2A korrespondiert. Die weiteren Markierungen 21 der Linse 2 korrespondieren vorzugsweise zu den Markierungen 2G des Blockstücks 2A,

Zur Positionierung werden die Markierungen 2F, 2G des Blockstücks 2A und die Markierungen 2H und 21 der Linse 2 vorzugsweise in Deckung gebracht . Dies gestattet eine sehr einfache Positionierung.

Die positionierte Linse 2 wird mit dem Blockstück 2A verblockt.

Anschließend kann die (weitere) Bearbeitung der Linse 2, insbesondere auf der Bearbeitungsseite 2E, und/oder eine Randbearbeitung der Linse 2 erfolgen.

Die Linse 2 ist bedarfsweise bereits in der Vorrichtung 1 bzw, Bearbeitungseinrichtung 3 oder auf sonstige Weise, insbesondere spanend oder formgebend, bearbeitet worden, insbesondere auf der Blockseite 2D. Insbesondere in diesem Fall einer ersten Bearbeitung der Linse 2 auf der späteren Blockseite 2D wird die Linse 2 vorzugsweise ebenso wie das Blockstück 2A markiert, insbesondere mit den Markierungen 2G und 21 versehen, wie beispielhaft in Fig. 5 angedeutet. Dieses Markieren der Linse 2 kann wiederum in der Vorrichtung 1 und/oder Bearbeitungseinrichtung 3 und/oder mit Hilfe der Markiereinrichtung 3G oder einer sonstigen Markiereinrichtung erfolgen.

Bei der (ersten) Bearbeitung der Linse 2 auf ihrer späteren Blockseite 2D kann die Linse 2 zunächst auf ihrer später zu bearbeitenden Bearbeitungsseite 2E geblockt sein. Dies ist in den Figuren jedoch nicht dargestellt.

Die Linse 2 muss jedoch nicht auf ihrer Blockseite 2D bereits spanend oder formgebend bearbeitet sein. Vielmehr kann die Blockseite 2D der Linse 2 bzw. des Linsenrohlings durch Gießen gebildet sein, wobei die Blockseite 2D insbesondere in üblicher Weise beschichtet und/oder mit einer Schutzfolie versehen sein kann. Weiter kann diese Blockseite 2D bzw. diese Linse oder dieser Linsenrohling auch bereits vorab bzw. werkseitig markiert sein oder erst vor Ort oder in der Vorrichtung 1 markiert werden.

Hinsichtlich der bevorzugten Lage der Markierungen 2F und 2G auf dem Blockstück 2A bzw. deren Stirnseite 2C bzw. hinsichtlich des Verfahrens zum Markieren ist anzumerken, dass das Markieren in Abhängigkeit von einer gewünschten exzentrischen Bearbeitung der Linse 2 abhängen kann und insbesondere auch ein exzentrisches Markieren, insbesondere bzgl, der Rotationsachse R und/oder einem Außendurchmesser der Linse 2 möglich ist und/oder dass das Markieren in Abhängigkeit von einer gewünschten Bearbeitung und/oder der vorherigen Bearbeitung der Linse 2 variieren oder erfolgen kann.

Fig. 5 unterscheidet sich von Fig. 4 beim Darstellungsbeispiel im Wesentlichen nur dadurch, dass die Linse 2 einen größeren Durchmesser als das Blockstück 2A aufweist. Die Markierungen 2H und 21 sind dementsprechend vom äußeren Rand weiter beabstandet als die Markierungen 2F und 2G.

Die Markierungen 2F und 2G am Blockstück 2A und, sofern vorhanden, die Markierungen 2H und 21 an der Linse 2 liegen vorzugsweise nicht in Bereichen, die durch das Blockmaterial 2B abgedeckt werden. Vielmehr liegen diese Markierungen insbesondere außerhalb des Blockmaterials 2B oder in dazwischenliegenden, vom Blockmaterial 2B nicht abgedeckten Bereichen. Das Blockmaterial 2B kann, wie bereits erwähnt, beispielsweise nur bereichsweise, insbesondere nur in Bereichen gewisser Stellen oder Punkte oder Ringabschnitten oder dergleichen angeordnet werden, so dass insbesondere dazwischen liegende Markierungen sichtbar sind oder bleiben.

Alternativ oder zusätzlich können die Markierungen 2F und 2G auch unmittelbar benachbart am Außenrand der Stirnfläche 2C und/oder seitlich am Blockstück 2A, insbesondere in einer sich an die Stimfläche 2C axial anschließenden Ringbereich des Blockstücks 2A angeordnet oder angebracht werden.

Alternativ oder zusätzlich können sich einzelne oder alle Markierungen 2F und 2G am Blockstück 2A auch radial, in Umfangsrichtung und/oder axial am Blockstück 2A erstrecken und/oder von der Stirnfläche 2C über den Rand hinaus axial am Blockstück 2A erstrecken oder angebracht sein.

Wie bereits erwähnt kann das Blockmaterial 2B auch beispielsweise durch eine Klebeschicht oder dergleichen gebildet sein. Es ist beispielsweise auch möglich, dass das Blockmaterial 2B bzw. die Klebeschicht - insbesondere erst nach der Bearbeitung des Blockstücks 2A, sofern eine solche Bearbeitung erfolgt - auf die Stirnfläche 2C aufgebracht und das Blockmaterial 2B bzw. die Klebeschicht mit einer oder mehrerer Markierungen 2F, 2G versehen bzw. markiert wird. Dieses Markieren wird im Sinne der vorliegenden Erfindung vorzugsweise ebenfalls als Markieren des Blockstücks 2A verstanden.

Alternativ oder zusätzlich kann auch eine nicht dargestellte Schutzfolie auf der Linse 2 bzw, der Blockseite 2D mit einer oder mehreren Markierungen 2H, 2I versehen werden. Dieses Markieren wird vorzugsweise im Sinne der vorliegenden Erfindung auch als Markieren der Linse 2 verstanden, Diese Schutzfolie dient insbesondere einem Schutz der Linse 2 bzw. der bereits bearbeiteten oder fertigen Blockseite 2D der Linse 2.

Beim Darstellungsbeispiel sind die linsenseitigen Markierungen 2H, 21 vorzugsweise auf der Blockseite 2D oder gegebenenfalls einer zugeordneten Schutzfolie oder dergleichen angeordnet. Jedoch können diese Markierungen bedarfsweise auch an sonstigen geeigneten Stellen der Linse 2, gegebenenfalls in der Linse 2 oder auch auf der noch zu bearbeitenden Bearbeitungsseite 2E angebracht werden. Die mögliche Lage der Markierungen bzw. Anbringung hängt primär davon ab, wie die Positionierung erfolgt. Insbesondere können die zueinander korrespondierenden Markierungen - hier beispielsweise die linsenseitigen Markierungen von den blockstückseitigen Markierungen - in axialer Richtung bzw. in Richtung der Linsendicke 2 beabstandet sein, wenn aufgrund eines festen Betrachtungswinkels, beispielsweise mittels einer entsprechend angeordneten Kamera oder dergleichen, eine genaue bzw. korrekte Positionierung ermöglicht oder sichergestellt wird.

Einzelne Merkmale der verschiedenen Bearbeitungsschritte (Markierschritte), bzw, Bearbeitungseinrichtungen und/oder der Vorrichtung 1 bzw. Steuerung 7 können auch unabhängig voneinander und in jeder beliebigen Kombination realisiert werden.

### Bezugszeichenliste

- 1: Vorrichtung
- 2: Linse
- 2A: Blockstück
- 2B: Blockmaterial
- 2C: Stirnfläche
- 2D: Blockseite
- 2E: Bearbeitungsseite
- 2F: Markierung
- 20: Markierung
- 2H: Markierung
- 21: Markierung
- 3: Bearbeitungseinrichtung
- 3A: Werkstückspindel
- 3B: Aufnahme
- 3C: Drehantrieb
- 3D: Drehwerkzeug
- 3E: Fräsantrieb
- 3F: Fräswerkzeug
- 30: Maikiereinnchtung
- 4: Poliereinrichtung
- 4A: Werkstückspindel
- 4B: Aufnahme
- 4C: Polierantrieb
- 4D: Polierwerkzeug
- 5: Reinigungseinrichtung
- 5A: Reinigungsraum
- 6: weitere Bearbeitungseinrichtung
- 6A: Bearbeitungsraum
- 7: Steuereinrichtung
- 7A: Designmodul
- 7B: Fertigungsmodul
- 7C: Ablaufsteuerung
- 7D: Benutzerführeinrichtung
- 7E: Einrichtungssteuerung
- 8: Eingabeeinrichtung

- 8A: Bedienfeld
- 8B: Anzeigeeinrichtung
- 8C: Schnittstelle
- 9: Gehäuse
- 9A: Eingabeklappe
- 9B: Eingabeklappe
- 10: Tank
- 11: Aufnahmeeinrichtung

- A: Bearbeitungsachse
- B: Drehung
- C: Rundachse
- L: Laserlicht
- R: Roatationsachse
- S: Schwenkbewegung
- W: Linearachse
- X: Linearachse
- Z: Linearachse
- FD: Fertigungsdaten
- GD: geometrische Daten
- OD: optische Daten

## Patentansprüche

1. Vorrichtung (1) zum Bearbeiten einer optischen Linse (2),
mit einer Bearbeitungseinrichtung (6) zum spanenden oder sonstigen formgebenden Bearbeiten eines Blockstücks (2A) für die Linse (2) und insbesondere zum spanenden oder sonstigen formgebenden Bearbeiten der Linse (2),
**dadurch gekennzeichnet,**
**dass** die Vorrichtung (1) zum Markieren des bearbeiteten Blockstücks (2A) zur Positionierung der zu bearbeitenden Linse (2) auf dem Blockstück (2A) ausgebildet ist.

2. Vorrichtung nach Anspruch 1, **dadurch gekennzeichnet, dass** die Vorrichtung (1) zum optischen Markieren des bearbeiteten Blockstücks (2A) ausgebildet ist.

3. Vorrichtung nach Anspruch 1 oder 2, **dadurch gekennzeichnet, dass** die Vorrichtung (1) eine Markiereinrichtung (3G) zum Markieren des Blockstücks (2A) aufweist.

4. Vorrichtung nach Anspruch 3, **dadurch gekennzeichnet, dass** die Markiereinrichtung (3G) zum Markieren der Linse (2) ausgebildet oder einsetzbar ist.

5. Vorrichtung nach einem der voranstehenden Ansprüche, **dadurch gekennzeichnet, dass** das Markieren mittels Laserlicht (L) erfolgt.

6. Verfahren zum Bearbeiten einer optischen Linse (2), wobei ein Blockstück (2A) für eine zu bearbeitende Linse (2) mit einer Markierung (2F, 2G) oder mehreren Markierungen (2F, 2G) zur translatorischen und/oder rotatorischen Positionierung der Linse (2) auf dem Blockstück (2A) markiert wird.

7. Verfahren nach Anspruch 6, **dadurch gekennzeichnet, dass** das Markieren mittels Laserlicht (L) erfolgt,

8. Verfahren nach Anspruch 6 oder 7, **dadurch gekennzeichnet, dass** das Markieren mittels einer Markiereinrichtung (3G) erfolgt, die auch dem Markieren von Linsen (2) dient

9. Verfahren nach einem der Ansprüche 6 bis 8, **dadurch gekennzeichnet, dass** das Blockstück (2A) vor dem Markieren spanend oder auf sonstige Weise formgebend in einer Vorrichtung (1) bearbeitet wird.

10. Verfahren nach Anspruch 9, **dadurch gekennzeichnet, dass** das Blockstück (2A) in oder von der Vorrichtung (1) zur spanenden oder sonstigen formgebenden Bearbeitung markiert wird,

11. Verfahren nach einem der Ansprüche 6 bis 10, **dadurch gekennzeichnet, dass** die Linse (2) mittels der Markierung(en) (2H, 21) auf oder relativ zu dem Blockstück (2A) positioniert und dann mit diesem zur (weiteren) Bearbeitung der Linse (2) verbunden wird.

12. Verfahren nach einem der Absprüche 6 bis 11, **dadurch gekennzeichnet, dass** das Blockstück (2A) in Abhängigkeit von einer gewünschten exzentrischen Bearbeitung der Linse (2) insbesondere exzentrisch markiert wird.

13. Verfahren nach einem der Ansprüche 6 bis 12, **dadurch gekennzeichnet, dass** das Blockstück (2A) in Abhängigkeit von einer gewünschten Bearbeitung und/oder vorherigen Bearbeitung der Linse (2) markiert wird.

14. Verfahren nach einem der Ansprüche 6 bis 13, **dadurch gekennzeichnet, dass** das Blockstück (2A) entlang eines Kreises markiert wird.

15. Verfahren nach einem der Ansprüche 6 bis 14, **dadurch gekennzeichnet, dass** die Linse (2) mit mindestens einer Markierung (2H, 21) markiert wird, die zu mindestens einer oder nur einer einzigen Markierung (2H, 21) auf dem Blockstück (2A) korrespondiert.
